# EUROPEAN PATENT SPECIFICATION

(11) **EP 2 633 944 B1**
(45) Date of publication and mention of the grant of the patent: **21.02.2018**
(21) Application number: 10858809.6
(22) Date of filing: 03.12.2010
(51) Int. Cl.: B23P 19/06, B23P 19/04

(54) **DOUBLE-SHAFT VARIABLE PITCH ELECTRIC BOLT FASTENING MACHINE**
ZWEIWELLIGE ELEKTRISCHE SCHRAUBENBEFESTIGUNGSMASCHINE MIT VERÄNDERLICHEM ANSTELLWINKEL
MACHINE ÉLECTRIQUE DE SERRAGE DE BOULONS À PAS VARIABLE À DOUBLE ARBRE

(30) Priority: 25.10.2010 CN 201010517372
(43) Date of publication of application: 04.09.2013
(73) Proprietor: Dalian Dexin M&E Technology Engineering Co. Ltd., Dalian, Liaoning 116033 (CN)
(72) Inventor: QI, Zhaojun, Dalian Liaoning 116033 (CN); HUANG, Yuejin, Dalian Liaoning 116033 (CN)
(74) Representative: ProI European Patent Attorneys
(86) International application number: PCT/CN2010/001959
(87) International publication number: WO 2012/055080

(56) References cited:
- EP-A2- 0 160 951
- EP-A2- 2 199 605
- WO-A1-2009/113739
- CN-A- 101 745 805
- CN-C- 1 232 384
- CN-Y- 2 686 794
- JP-A- 8 187 629
- US-A- 5 582 079
- US-A1- 2003 131 459

## Description

### Technical Field

The present invention relates to a field of electric bolt-tightening machine, particularly to a double-shaft variable propeller pitch electric bolt-tightening machine according to the preamble of claim 1.

Such a machine is known from EP 2 199 605 A2.

### Background

Along with continuous development of industries, the energy problem has become more and more serious, therefore, people become focused on renewable energy sources. The wind energy is a kind of green and renewable energy, correspondingly, people become focused on wind power generation, to which a wind power variable propeller pitch device is a necessary equipment. At present, all the wind power variable propeller pitch device manufacturers adopt tools, such as pneumatic impact wrench and hydraulic wrench, to tighten and assemble bolts of the variable propeller pitch device. However, there are disadvantages including big noise and vibration, uneven torque, uncertainty of the tightening precision, easy local deformation of the variable propeller pitch device and a waste of human cost.

### Summary of the Invention

To overcome the defects of the existing products, the present invention provides a double-shaft variable propeller pitch electric bolt-tightening machine according to claim 1.

In order to realize the above purpose, the technical solution of the present invention is as follows:
The double-shaft variable propeller pitch electric bolt-tightening machine according to claim 1, comprising a base body front end, a base body rear end, a servomotor, a servo rotating table, a servo feeding table, a pneumatic device, a main machine base, a lifter, a lift adjusting guide rod, supporting rods, a lift platform, an angle adjusting meter, a bearing platform, a rotary servomotor, an output rotating shaft, a centring device, a rotating arm, a sliding lead screw, a tightening servomotor, and an automatic nut-identification and reaction force device; wherein the servomotor and the servo rotating table are disposed at the base body front end, and the servo feeding table is disposed at the base body rear end; the pneumatic device is disposed at a distal end of the servo feeding table on which the main machine base is fixed; the lifter is disposed on the main machine base, and the lift adjusting guide rod is fixed on the lifter and is positioned at an upper portion of a top surface of the main machine base; the supporting rods are disposed at the top surface of the main machine base, and the lift platform is fixed on the lift adjusting guide rod and the supporting rods; the angle adjusting meter and the bearing platform are disposed on the lift platform; the rotary servomotor is disposed on the bearing platform and is connected with the output rotating shaft; the centring device and the rotating arm are disposed on the output rotating shaft; the rotating arm is provided with the sliding leads crew on which the tightening servomotor is disposed; the tightening servomotor is connected with the automatic nut-identification and reaction force device.

The automatic nut-identification and reaction force device may include a feeding lead screw, a tightening shaft, a reaction force supporting board, a dedicated sleeve and a reaction force sleeve; the reaction force supporting board is connected with the tightening shaft, and the dedicated sleeve and the reaction force sleeve are disposed on the reaction force supporting board.

The servomotor may control the servo rotating table to carry out circular motion, and precisely position three working surfaces such that a 120-degree angle is formed to each other.

The main machine base may slide back and forth and is positioned on the servo feeding table.

The lift adjusting guide rod may include two lift adjusting guide rods that are in parallel with each other and vertical to the top surface of the main machine base.

The supporting rods may be composed of four rods.

The position of the lift platform may be capable of being adjusted by adjusting the height of the lift adjusting guide rod.

The angle adjusting meter may be capable of adjusting an inclined angle of the tightening machine main body in the vertical surface.

The rotating arm may be centrosymmetric with respect to the output rotating shaft.

The advantages and beneficial effects of the present invention are as follows:
simple operation, high tightening precision, uniform pressing force, capability of memorizing positions of unqualified products, simultaneous tightening with respect to diagonal bolts on the variable propeller pitch device, time-and-labor saving, assurance of the mounting precision of the variable propeller pitch device without deforming the variable propeller pitch device.

### Brief description of the drawings

Fig. 1 is a structural schematic diagram of the present invention;
Fig. 2 is a structural schematic diagram of the automatic nut-identification and reaction force device.

### Detailed Description of the Preferred Embodiments

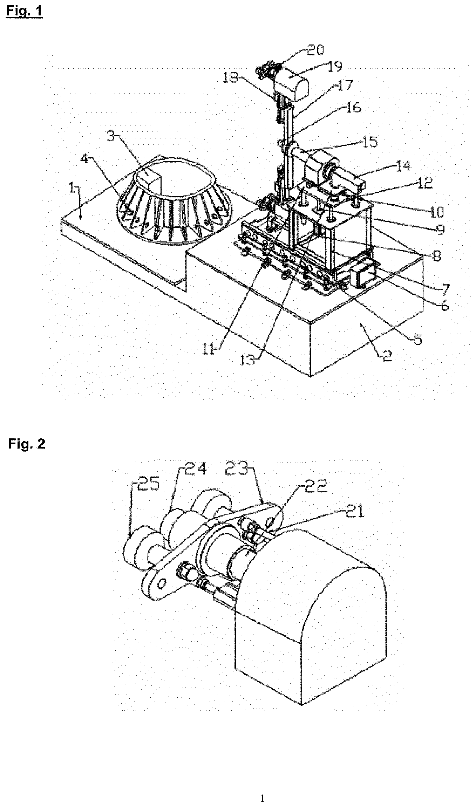

The reference numbers in Figs. 1 and 2 are as follows: base body front end 1; base body rear end 2; servomotor 3; servo rotating table 4; servo feeding table 5; pneumatic device 6; main machine base 7; lifter 8; lift adjusting guide rod 9; supporting rods 10; lift platform 11; angle adjusting meter 12; bearing platform 13; rotary servomotor 14; output rotating shaft 15; centring device 16; rotating arm 17; sliding lead screw 18; tightening servomotor 19; automatic nut-identification and reaction force device 20; feeding lead screw 21; tightening shaft 22; reaction force supporting board 23; dedicated sleeve 24; and reaction force sleeve 25.

As shown in Figs. 1 and 2, the double-shaft variable propeller pitch electric bolt-tightening machine mainly comprises: a base body front end 1, a base body rear end 2, a servomotor 3, a servo rotating table 4, a servo feeding table 5, a pneumatic device 6, a main machine base 7, a lifter 8, a lift adjusting guide rod 9, supporting rods 10, a lift platform 11, an angle adjusting meter 12, a bearing platform 13, a rotary servomotor 14, an output rotating shaft 15, a centring device 16, a rotating arm 17, a sliding lead screw 18, a tightening servomotor 19, and an automatic nut-identification and reaction force device 20; wherein the servomotor 3 and the servo rotating table 4 are disposed at the base body front end 1, and the servo feeding table 5 is disposed at the base body rear end 2; the pneumatic device 6 is disposed at a distal end of the servo feeding table 5 on which the main machine base 7 is fixed; the lifter 8 is disposed on the main machine base 7, and the lift adjusting guide rod 9 is fixed on the lifter 8 and is positioned at an upper portion of a top surface of the main machine base 7; the supporting rods 10 are disposed on the top surface of the main machine base 7, and the lift platform 11 is fixed on the lift adjusting guide rod 9 and the supporting rods 10; the angle adjusting meter 12 and the bearing platform 13 are disposed on the lift platform 11; the rotary servomotor 14 is disposed on the bearing platform 13 and is connected with the output rotating shaft 15; the centring device 16 and the rotating arm 17 are disposed on the output rotating shaft 15; the rotating arm 17 is provided with the sliding lead screw 18 on which the tightening servomotor 19 is disposed; the tightening servomotor 19 is connected with the automatic nut-identification and reaction force device 20; the automatic nut-identification and reaction force device 20 includes a feeding lead screw 21, a tightening shaft 22, a reaction force supporting board 23, a dedicated sleeve 24 and a reaction force sleeve 25; the reaction force supporting board 23 is connected with the tightening shaft 22, and the dedicated sleeve 24 and the reaction force sleeve 25 are disposed on the reaction force supporting board 23.

The working principle of the present machine is as follows:
The variable propeller pitch device to be assembled is fixed on the servo rotating table 4, and an operating button on a control panel is pressed so as to adjust a bolt mounting surface of the variable propeller pitch device to a direction facing to the tightening machine. Further, a button of the lifter 8 on the control panel is pressed to adjust the height of the lift platform 11, so as to meet the requirement of assembling height; at this time, the lifter platform 11 is precisely positioned with the bolt mounting surface of the variable propeller pitch device by the centring device 16 on the output rotating shaft 15. Moreover, the position of the feeding lead screw 21 relative to the rotating arm 17 is adjusted according to the diameter of a pitch circle on which the bolts on the variable propeller pitch device exist; pushed by the pneumatic device 6, the feeding table 5 drives the main machine base 7 to move forward; the automatic nut-identification and reaction force device 20 is sleeved on the bolt of the variable propeller pitch device, after a startup button being pressed, the two automatic nut-identification and reaction force devices 20 aligns to the diagonal bolts on the variable propeller pitch device and carries out the first tightening process. When a predetermined torque value is reached, the rotating arm 17 drives the automatic nut-identification and reaction force devices 20 to rotate circumferentially to the diagonal bolt at a next station and carries out tightening process, and at the same time, the automatic nut-identification and reaction force devices 20 memorize the positions of the unqualified products and feed the information back to a computer. When all the bolts on one bolt mounting surface of the variable propeller pitch device have been tightened, the tightening machine stops tightening process, the main machine base 7 is driven by the pneumatic device 6 to move backward, and the servo rotating table 4 drives the variable propeller pitch device to rotate 120 degree to a next working surface and repeat the above operation.

## Claims

1. A double-shaft variable propeller pitch electric bolt-tightening machine, comprising:
a base body front end (1), a base body rear end (2), a servomotor (3), a servo rotating table (4), and a servo feeding table (5),
**characterized by**
a pneumatic device (6), a main machine base (7), a lifter (8), a lift adjusting guide rod (9), supporting rods (10), a lift platform (11), an angle adjusting meter (12), a bearing platform (13), a rotary servomotor (14), an output rotating shaft (15), a centring device (16), a rotating arm (17), a sliding lead screw (18), a tightening servomotor (19), and an automatic nut-identification and reaction force device (20);
wherein, the servomotor (3) and the servo rotating table (4) are disposed at the base body front end (1), and
the servo feeding table (5) is disposed at the base body rear end (2);
the pneumatic device (6) is disposed at a distal end of the servo feeding table (5) on which the main machine base (7) is fixed;
the lifter (8) is disposed on the main machine base (7), and the lift adjusting guide rod (9) is fixed on the lifter (8) and is positioned at an upper portion of a top surface of the main machine base (7);
the supporting rods (10) are disposed at the top surface of the main machine base (7), and the lift platform (11) is fixed on the lift adjusting guide rod (9) and the supporting rods (10);
the angle adjusting meter (12) and the bearing platform (13) are disposed on the lift platform (11); the rotary servomotor (14) is disposed on the bearing platform (13) and is connected with the output rotating shaft (15);
the centring device (16) and the rotating arm (17) are disposed on the output rotating shaft (15);
the rotating arm (17) is provided with the sliding lead screw (18) on which the tightening servomotor (19) is disposed; and
the tightening servomotor (19) is connected with the automatic nut-identification and reaction force device (20).

2. The double-shaft variable propeller pitch electric bolt-tightening machine according to claim 1, wherein the automatic nut-identification and reaction force device (20) includes a feeding lead screw (21), a tightening shaft (22), a reaction force supporting board (23), a dedicated sleeve (24) and a reaction force sleeve (25); the reaction force supporting board (23) is connected with the tightening shaft (22), and the dedicated sleeve (24) and the reaction force sleeve (25) are disposed on the reaction force supporting board (23).

3. The double-shaft variable propeller pitch electric bolt-tightening machine according to claim 1, wherein the servomotor (3) controls the servo rotating table (4) to carry out circular motion, and precisely positions three working surfaces such that a 120-degree angle is formed to each other.

4. The double-shaft variable propeller pitch electric bolt-tightening machine according to claim 1, wherein the main machine base (7) slides back and forth and is positioned on the servo feeding table (5).

5. The double-shaft variable propeller pitch electric bolt-tightening machine according to claim 1, wherein the lift adjusting guide rod (9) includes two lift adjusting guide rods (9) that are in parallel with each other and vertical to the top surface of the main machine base (7).

6. The double-shaft variable propeller pitch electric bolt-tightening machine according to claim 1, wherein the supporting rods (10) are composed of four rods (10).

7. The double-shaft variable propeller pitch electric bolt-tightening machine according to claim 1, wherein a position of the lift platform (11) is capable of being adjusted by adjusting the height of the lift adjusting guide rod (9).

8. The double-shaft variable propeller pitch electric bolt-tightening machine according to claim 1, wherein the angle adjusting meter (12) is capable of adjusting an inclined angle of the tightening machine main body in a vertical surface.

9. The double-shaft variable propeller pitch electric bolt-tightening machine according to claim 1, wherein the rotating arm (17) is centrosymmetric with respect to the output rotating shaft (15).

## Patentansprüche

1. Zweiwellige elektrische Schraubenbefestigungsmaschine mit veränderlichem Anstellwinkel, umfassend: ein vorderes Ende (1) des Grundkörpers, ein hinteres Ende (2) des Grundkörpers, einen Servomotor (3), einen Servo-Drehtisch (4), einen Servo-Zuführtisch (5),
**gekennzeichnet durch**
eine pneumatische Vorrichtung (6), eine Hauptmaschinenbasis (7), einen Heber (8), eine Hubeinstellführungsstange (9), Tragstangen (10), eine Hubplattform (11), ein Winkeleinstellinstrument (12), eine Lagerplattform (13), ein Drehservomotor (14), eine Ausgangsdrehwelle (15), eine Zentriervorrichtung (16), ein Dreharm (17), eine Gleitführungsschraube (18), ein Anzugsservomotor (19) und eine automatische Mutteridentifikations- und Reaktionskraftvorrichtung (20);
wobei der Servomotor (4) und der Servo-Drehtisch (4) am vorderen Ende (1) des Basiskörpers angeordnet sind und der Servo-Zuführtisch (5) am hinteren Ende (2) des Basiskörpers angeordnet ist;
wobei die pneumatische Vorrichtung (6) an einem distalen Ende des Servo-Zuführtisches (5) angeordnet ist, an dem die Hauptmaschinenbasis (7) befestigt ist;
wobei der Heber (8) an der Hauptmaschinenbasis (7) angeordnet ist, und wobei die Hubeinstellführungsstange (9) an dem Heber (8) befestigt und an einem oberen Abschnitt einer oberen Oberfläche der Hauptmaschinenbasis (7) positioniert ist;
wobei die Tragstangen (10) an der oberen Oberfläche der Hauptmaschinenbasis (7) angeordnet sind, und die Hubplattform (11) an der Hubeinstellführungsstange (9) und den Tragstangen (10) befestigt ist;
wobei das Winkeleinstellinstrument (12) und die Lagerplattform (13) auf der Hubplattform (11) angeordnet sind; wobei der Rotationsservomotor (14) auf der Lagerplattform (13) angeordnet und mit der Ausgangsdrehwelle (15) verbunden ist;
wobei die Zentriervorrichtung (16) und der Dreharm (17) an der Ausgangsdrehwelle (15) angeordnet sind;
wobei der Dreharm (17) mit der Gleitführungsschraube (18) versehen ist, auf der der Anzugsservomotor (19) angeordnet ist;
wobei der Anzugsservomotor (19) mit der automatischen Mutteridentifikations- und Reaktionskraftvorrichtung (20) verbunden ist.

2. Zweiwellige elektrische Schraubenbefestigungsmaschine mit veränderlichem Anstellwinkel nach Anspruch 1, wobei automatische Mutteridentifikations- und Reaktionskraftvorrichtung (20) eine Vorschubspindel (21), eine Spannwelle (22), eine Reaktionskraftträgerplatte (23), eine zugeordnete Hülse (24) und eine Reaktionskrafthülse (25) umfasst;
wobei die Reaktionskraftträgerplatte (23) mit der Spannwelle (22) verbunden ist, und wobei die zugeordnete Hülse (24) und die Reaktionskrafthülse (25) auf der Reaktionskraftträgerplatte (23) angeordnet sind.

3. Zweiwellige elektrische Schraubenbefestigungsmaschine mit veränderlichem Anstellwinkel nach Anspruch 1, wobei der Servomotor (3) den Servo-Drehtisch (4) zum Ausführen einer kreisförmigen Bewegung steuert und drei Arbeitsflächen präzise positioniert, so dass ein 120-Grad-Winkel zueinander gebildet wird.

4. Zweiwellige elektrische Schraubenbefestigungsmaschine mit veränderlichem Anstellwinkel nach Anspruch 1, wobei die Hauptmaschinenbasis (7) vor und zurück gleitet und auf dem Servo-Zuführtisch (5) positioniert ist.

5. Zweiwellige elektrische Schraubenbefestigungsmaschine mit veränderlichem Anstellwinkel nach Anspruch 1, wobei die Hubeinstellführungsstange (9) zwei Hubeinstellführungsstangen (9) aufweist, die parallel zueinander und vertikal zu der oberen Oberfläche der Hauptmaschinenbasis (7) sind.

6. Zweiwellige elektrische Schraubenbefestigungsmaschine mit veränderlichem Anstellwinkel nach Anspruch 1, wobei die Tragstangen (10) aus vier Stangen (10) bestehen.

7. Zweiwellige elektrische Schraubenbefestigungsmaschine mit veränderlichem Anstellwinkel nach Anspruch 1, wobei eine Position der Hubplattform (11) durch Einstellen der Höhe der Hubeinstellführungsstange (9) eingestellt werden kann.

8. Zweiwellige elektrische Schraubenbefestigungsmaschine mit veränderlichem Anstellwinkel nach Anspruch 1, wobei die Winkeleinstellinstrument (12) dazu ausgebildet ist, einen Neigungswinkel des Spannmaschinenhauptkörpers in einer vertikalen Fläche einzustellen.

9. Zweiwellige elektrische Schraubenbefestigungsmaschine mit veränderlichem Anstellwinkel nach Anspruch 1, wobei der Dreharm (17) in Bezug auf die Ausgangsdrehwelle (15) zentralsymmetrisch ist.

## Revendications

1. Machine de serrage de boulons électrique à pas variable à double arbre, comprenant: une partie avant du corps de base (1), une partie arrière du corps de base (2), un servomoteur (3), une table rotative servo-commandée (4), et une table d'alimentation servo-commandée (5),
**caractérisé par**
un dispositif pneumatique (6), un socle principal de la machine (7), un élévateur (8), une tige de guidage pour le réglage du levage (9), des tiges de support (10), une plate-forme élévatrice (11), un dispositif de mesure et de réglage de l'angle (12), une plate-forme de support (13), un servomoteur rotatif (14), un arbre rotatif de sortie (15), un dispositif de centrage (16), un bras rotatif (17), une vis sans fin coulissante (18), un servomoteur de serrage (19) et un dispositif automatique d'identification des écrous et de détermination de force de réaction (20);
où le servomoteur (30) et la table rotative servo-commandée (4) sont placés à l'avant du corps de base (1), et,
la table d'alimentation servo-commandée (5) est placée à l'arrière du corps de base (2);
le dispositif pneumatique (6) est placé a une extrémité distale de la table d'alimentation servo-commandée (5) sur lequel est fixé le socle principal de la machine (7);
l'élévateur (8) est place sur le socle principal de la machine (7), et la tige de guidage pour le réglage du levage (9) est fixée sur l'élévateur (8) et est positionnée sur un tronçon supérieur de la surface supérieure du socle principal de la machine (7);
les tiges de support (10) sont placées sur la surface supérieure du socle principal de la machine (7), et la plate-forme élévatrice (11) est fixée sur la tige de guidage pour le réglage du levage (9) et sur les tiges de support (10);
le dispositif de mesure et de réglage de l'angle (12) et la plate-forme de support (13) sont placés sur la plate-forme élévatrice (11); le servomoteur rotatif (14) est placé sur la plate-forme élévatrice (13) et est connecté avec l'arbre rotatif de sortie (15);
le dispositif de centrage (16) et le bras rotatif (17) sont placés sur l'arbre rotatif de sortie (15);
le bras rotatif (17) est équipé de la vis sans fin coulissante (18) sur laquelle est placé le servomoteur de serrage (19); et
le servomoteur de serrage (19) est connecté avec le dispositif automatique d'identification des écrous et de détermination de force de réaction (20).

2. La machine de serrage de boulons électrique à pas variable à double arbre, selon la revendication 1, où le dispositif automatique d'identification des écrous et de détermination de force de réaction (20) comprend une
vis sans fin d'alimentation (21), un arbre de serrage (22), une plaque de support pour force de réaction (23), un manchon dédié (24) et un manchon pour force de réaction (25);
la plaque de support pour force de réaction (23) est connectée avec l'arbre de serrage (22), et le manchon dédié (24) et le manchon pour force de réaction (25) sont placés sur la plaque de support pour force de réaction (23).

3. La machine de serrage de boulons électrique à pas variable à double arbre, selon la revendication 1, où le servomoteur (3)
commande la table rotative servo-commandée (4)
pour exécuter un mouvement
circulaire, et positionne précisément trois surfaces de travail de façon à former un angle de 120 grades l'une par rapport aux autres.

4. La machine de serrage de boulons électrique à pas variable à double arbre, selon la revendication 1, où le socle principal de la machine (7)
glisse d'avant en arrière et est placé sur la
table d'alimentation servo-commandée (5).

5. La machine de serrage de boulons électrique à pas variable à double arbre, selon la revendication 1, où la tige de guidage pour le réglage du levage (9) comprend deux
tiges de guidage pour le réglage du levage (9)
qui sont parallèles les unes par rapport aux autres et verticales par rapport à la surface supérieure du
socle principal de la machine.

6. La machine de serrage de boulons électrique à pas variable à double arbre, selon la revendication 1, où les tiges de support (10) sont composées par quatre tiges (10).

7. La machine de serrage de boulons électrique à pas variable à double arbre, selon la revendication 1, où une position sur la plate-forme d'élevage (11)
est capable d'être réglée par le réglage de la
hauteur de la tige de guidage pour le réglage du levage (9).

8. La machine de serrage de boulons électrique à pas variable à double arbre, selon la revendication 1, où le dispositif de mesure et de réglage de l'angle (12)
est capable de régler un angle d'inclinaison du
corps principal du tendeur sur une surface verticale.

9. La machine de serrage de boulons électrique à pas variable à double arbre, selon la revendication 1, où le bras rotatif (17)
est en rapport symétrique central par rapport à
l'arbre rotatif de sortie(15).
